# EUROPÄISCHE PATENTANMELDUNG

(11) **EP 3 168 895 A1**
(43) Veröffentlichungstag der Anmeldung: **17.05.2017**
(21) Anmeldenummer: 16195287.4
(22) Anmeldetag: 24.10.2016
(51) Int. Cl.: H01M 2/02, H01M 10/625, H01M 10/6563, H01M 10/6557, H01M 10/6567, H01M 10/613, B66F 9/075

(54) **TRAKTIONSBATTERIE FÜR EIN FLURFÖRDERZEUG**

(30) Priorität: 16.11.2015 DE 102015119705
(71) Anmelder: STILL GmbH, 22113 Hamburg (DE)
(72) Erfinder: Wede, Marc, 22941 Bargteheide (DE); Mittmann, Heribert, 22145 Hamburg (DE); Kalweit, Andreas, 21395 Tespe (DE)
(74) Vertreter: Patentship Patentanwaltsgesellschaft mbH

(57) **Zusammenfassung**

Bei einer Traktionsbatterie für ein Flurförderzeug mit einem Batterietrog (3) und einer Mehrzahl von Zellen (5,7), ist zwischen den Zellen (7) mindestens ein Kühlkanal (6) in dem Batterietrog (3) angeordnet.

## Beschreibung

Die Erfindung betrifft eine Traktionsbatterie für ein Flurförderzeug mit einem Batterietrog und einer Mehrzahl von Zellen.

Für den Betrieb von batterie-elektrisch angetriebenen Flurförderzeugen, wie etwa beispielsweise Gabelstaplern, kommen Traktionsbatterien zum Einsatz, die im Regelfall als austauschbare Batterien in ein Batteriefach eingesetzt und, sobald sie entladen sind, gegen eine aufgeladene Traktionsbatterie ersetzt werden können. Im Regelfall sind diese Traktionsbatterien als Blei-Säurebatterie ausgeführt, wobei auch häufig eine Blei-Geltechnologie eingesetzt wird, wobei ein Elektrolyt der Zellen chemisch gebunden gelartige Konsistenz aufweist.

Solche Traktionsbatterien sind so aufgebaut, dass mehrfach in Reihe verschaltete, standardisierte Zellen in einem Batterietrog angeordnet sind. Durch die Reihenschaltung wird eine geforderte Spannung erreicht. Der Batterietrog kann mit entsprechenden Transportmitteln, wie etwa einem weiteren Gabelstapler oder Flurförderzeug, transportiert werden und schützt die Zellen vor Beschädigungen. Dabei sind die verschiedenen möglichen Batterietröge sowie deren Nenngewichte ebenfalls standardisiert. Das Gesamtgewicht der Traktionsbatterie ist bei batterie-elektrisch betriebenen Gegengewichtsgabelstaplern üblicherweise als Teil wirksamer Gegengewichte zu einer Last in den Stabilitätsberechnungen berücksichtigt. Aus diesem Grund ist es nicht möglich, kleinere bzw. leichtere Traktionsbatterien zu verwenden. Darüber hinaus werden Traktionsbatterien so ausgelegt, dass möglichst große Zellen in den Batterietrog eingesetzt werden, um durch maximale Ausnutzung des Raumes eine möglichst hohe Energiedichte und Kapazität der Traktionsbatterie zu erreichen.

Blei-Säurebatterien als Traktionsbatterien sind sehr robust und seit Jahrzehnten in vielen Einsatzbereichen bewährt. Nachteilig an diesem Stand der Technik ist jedoch, dass diese Batterien einen relativ hohen Innenwiderstand aufweisen im Vergleich zu beispielsweise Lithium-Ionenbatterien. Der hohe Innenwiderstand führt sowohl bei einem Entladebetrieb wie auch bei einem Aufladen zu einem hohen Wärmeeintrag in die Batterie. Bei Traktionsbatterien mit sehr großer Kapazität und einem entsprechend ungünstigen Verhältnis der Oberfläche zu dem dann zwangsläufig großen Volumen ergeben sich erhebliche Wärmekonzentrationen durch Abwärme.

Bei Traktionsbatterien mit großer Kapazität und Ausführung als Blei-Säurebatterie, beispielsweise bei Traktionsbatterien im Bereich von Gewichten oberhalb von 1 t, ist es dann oftmals nicht mehr möglich, wie üblich acht oder mehr Stunden pro Tag die Traktionsbatterie durchgehend einzusetzen, sondern es müssen längere Auskühlphasen vorgesehen werden, damit nicht unzulässig hohe Temperaturen der Zellen erreicht werden. Beispielsweise hat sich gezeigt, dass eine 80 V Batterie mit einer Kapazität von 1240 Ah im Einsatz innerhalb eines Lade-Entladezyklus Abkühlpausen bis zum nächsten solchen Zyklus von einem bis hin zu vier Tagen benötigt. Dadurch entstehen erhebliche Kosten und müssen insgesamt mehr Traktionsbatterien zum Wechseln vorgehalten werden.

Aus der DE 10 2013 113 015 A1 ist eine Traktionsbatterie für ein Flurförderzeug bekannt, die in dem Flurförderzeug gekühlt wird, indem das Elektrolyt als Kühlmittel umgewälzt wird. Eine Kühleinrichtung für das Elektrolyt kann als Luft-Wärmetauscher ausgestaltet sein, der durch einen Lüfter mit einem Kühlluftstrom durchströmt wird.

Nachteilig an diesem Stand der Technik ist, dass die Handhabung des Elektrolyts als Säure weitere Probleme aufwirft und ein Einsatz bei Gel-Batterie nicht möglich ist.

Der vorliegenden Erfindung liegt die Aufgabe zugrunde, eine Traktionsbatterie für ein Flurförderzeug zur Verfügung zu stellen, die die oben genannten Nachteile vermeidet und mit der auch bei hohen Batteriekapazitäten ein möglichst unterbrechungsfreier Betrieb möglich ist.

Diese Aufgabe wird durch eine Traktionsbatterie für ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einer Traktionsbatterie für ein Flurförderzeug mit einem Batterietrog und einer Mehrzahl von Zellen zwischen den Zellen mindestens ein Kühlkanal in dem Batterietrog angeordnet ist.

Durch einen oder mehrere solcher Kühlkanäle kann insbesondere bei großen Bleisäurebatterien die Einsatzzeit der Traktionsbatterie deutlich erhöht werden. Durch die Kühlkanäle kann bereits beim Entladen der Traktionsbatterie wie auch beim Aufladen der Traktionsbatterie sowie in Pausenzeiten die anfallende Abwärme erheblich besser abgeführt werden. Dies gilt insbesondere für die Zellen, die innerhalb des Batterietrogs in der Mitte bzw. in einem zentralen Bereich angeordnet sind. Im Gegensatz zu Zellen am Rand des Batterietrogs können diese nur wenig Wärme über Konvektion an die Wände des Batterietrogs abgeben und weisen daher eine höhere Temperatur auf. Vorteilhaft können Zeiträume für ein Abkühlen großer Blei-Säurebatterie bzw. Blei-Gelbatterien verringert oder vermieden werden. Insgesamt müssen weniger Traktionsbatterien zum Wechseln bereitgehalten werden.

Vorteilhaft läuft der Kühlkanal von einer Wandseite des Batterietrogs bis zur anderen Wandseite des Batterietrogs durch.

In einer günstigen Ausgestaltung läuft der Kühlkanal durch eine Mitte des Batterietrogs.

Es kann eine Mehrzahl von Kühlkanälen parallel angeordnet sein, bevorzugt durch einen mittleren Bereich des Batterietrogs laufend.

Vor allem der mittlere Bereich im Inneren des Batterietrogs neigt zu einem Wärmestau beim Betrieb der Traktionsbatterie. Daher ist es besonders vorteilhaft, diesen Bereich zu kühlen. Hierzu können auch mehrere Kühlkanäle so angeordnet werden, dass sie eher durch den mittleren Bereich des Batterietrogs verlaufen.

Es können zur Bildung des Kühlkanals Zellen mit gegenüber den Maßen normierter Zellen abweichenden Außenabmessungen eingesetzt werden.

Für Zellen von Blei-Säurebatterien oder Gel-Batterien von Flurförderzeugen sind standardisierte Maße üblich. Wenn etwas kleinere als diese standardisierten Zellen eingesetzt werden, kann der Bauraum gewonnen werden, um in den genormten Batterietrögen einen oder mehrere Kühlkanäle anzuordnen. Dabei unterscheiden sich die kleineren Zellen im Regelfall nur in der Länge der Zelle, da Zellen aus mehreren Polpaaren zusammengesetzt sind, deren Einzelteile standardisiert sind. Daher sind Höhe und Breite sowie die Teillänge eines Polpaares identisch. Wenn nun eine verminderte Anzahl von Polpaaren innerhalb einer Zelle eingesetzt wird, ergibt sich in dieser Richtung eine kürzere Länge gegenüber den Standardmaßen der Zelle und kann über mehrere Zellen hinweg der Bauraum im Batterietrog für den Kühlkanal oder sonstige Kühlvorrichtungen gewonnen werden. Der Kühlkanal bildet dann einen rechteckigen Hohlraum zwischen den Batteriezellen, der sich über die volle Länge und Tiefe des Batterietrogs erstrecken kann.

Vorteilhaft ist durch den Kühlkanal ein Luftstrom geführt.

Bevorzugt wird im Inneren des Kühlkanals der Luftstrom dabei so geführt, dass er von Außenseiten der Zellen möglichst viel Wärme über die Luft abführt.

Der Kühlkanal kann Luftführungen aufweisen, insbesondere an der Oberseite eine Einlassöffnung sowie eine Auslassöffnung.

Beispielsweise kann ein Luftstrom an einer Seitenwand des Batterietrogs in den Kühlkanal hinein geführt und an der Gegenseite wiederum an der Wand des Batterietrogs herausgeführt werden. Dabei ist es denkbar, den Kanal im Übrigen abzudecken. Es können alternativ oder zusätzlich auch weitere Luftführungsvorrichtungen vorgesehen sein, mit denen der Luftstrom innerhalb des Kühlkanals gelenkt und geleitet werden kann.

In einer günstigen Ausgestaltung ist mindestens ein Lüfter zur Erzeugung des Luftstroms vorgesehen.

Der Lüfter kann dabei insbesondere als Teil der Traktionsbatterie in diese integriert sein. Zusätzlich kann eine Steuerung vorgesehen sein, die den Lüfter regelt.

Der Lüfter kann temperaturabhängig durch einen Temperatursensor gesteuert sein.

Damit wird der Energieverbrauch des Lüfters minimiert und dieser nur eingesetzt, wenn dies erforderlich ist. Es ist natürlich auch denkbar, den Lüfter dauernd laufen zu lassen. Insbesondere aber kann auch eine temperaturabhängige Regelung dahingehend erfolgen, dass die Drehzahl und Luftfördermenge des Lüfters geregelt wird, beispielsweise durch eine Pulsweitenmodulation mit entsprechender Steuerung, die zusammen mit dem Lüfter in die Traktionsbatterie integriert und in den Batterietrog eingebaut sind.

Der Lüfter kann über eine drahtlose oder kabelgebundene Signalverbindung von einem Ladegerät und/oder dem Flurförderzeug gesteuert werden.

Eine solche Signalverbindung kann beispielsweise auch in eine Datenverbindung zur allgemeinen Steuerung der Traktionsbatterie integriert sein. Etwa bei anderen Batterietypen, wie Lithium-Ionenbatterien, ist eine Steuerung der Batterie regelmäßig erforderlich. Insbesondere kann eine solche Datenverbindung Teil eines Bussystems sein, mit dem eine Verbindung zu dem Flurförderzeug besteht. Die physikalische Übertragung der Daten kann dabei sowohl über eine Kabelverbindung erfolgen, als auch drahtlos.

In einer Ausgestaltung sind in den Kühlkanälen Kühlvorrichtungen mit Wasser als Kühlmittel angeordnet.

Es ist beispielsweise denkbar, dass flache Elemente in die Kühlkanäle eingesetzt werden, in denen Leitungen mit einem Wasserumlauf integriert sind. Weiterhin ist es auch denkbar, dass an der Oberseite des Batterietrogs dieses Wasser durch einen Wärmetauscher mit einem Lüfter die aufgenommene Wärme abgibt.

Vorteilhaft sind Zusatzgewichte, insbesondere in den Kühlkanälen, vorgesehen, so dass die Traktionsbatterie das Gewicht einer Standardbatterie ohne Kühlkanäle aufweist.

Solche Zusatzgewichte können beispielsweise plattenförmige Elemente aus Stahl sein, die in die Kühlkanäle eingesetzt werden und noch ausreichend Raum belassen für einen Kühlluftstrom.

Zusätzlich sind Maßnahmen denkbar, dass im Flurförderzeug ein Wärmestau über der Traktionsbatterie vermieden wird durch ausreichend große Abluftkanäle und/oder einen oder mehrere Lüfter, die den Batterieraum entlüften.

Weitere Vorteile und Einzelheiten der Erfindung werden anhand der in den schematischen Figuren dargestellten Ausführungsbeispiele näher erläutert. Hierbei zeigt
- Fig. 1: schematisch in Aufsicht eine Traktionsbatterie nach dem Stand der Technik und
- Fig. 2: schematisch in Aufsicht eine erfindungsgemäße Traktionsbatterie.

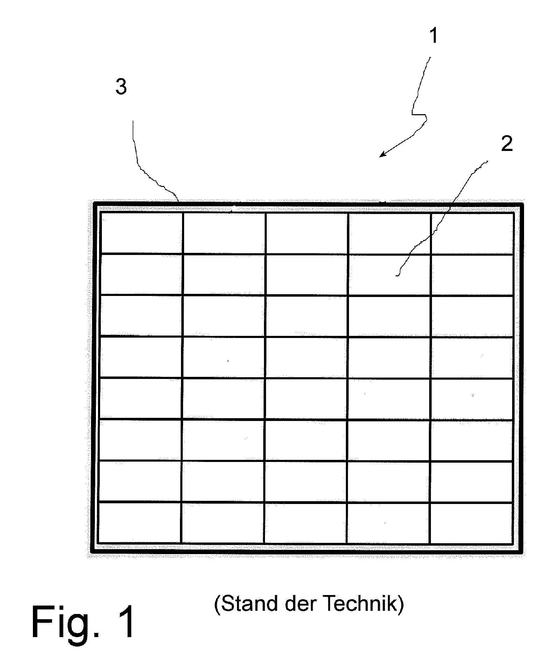

Die Fig. 1 zeigt schematisch in Aufsicht eine Traktionsbatterie 1 nach dem Stand der Technik. Eine Vielzahl von standardisierten Zellen 2 füllt einen Batterietrog 3 vollständig aus, um den zur Verfügung stehenden Bauraum maximal auszunutzen und eine möglichst große Kapazität der Traktionsbatterie 1 zu ermöglichen.

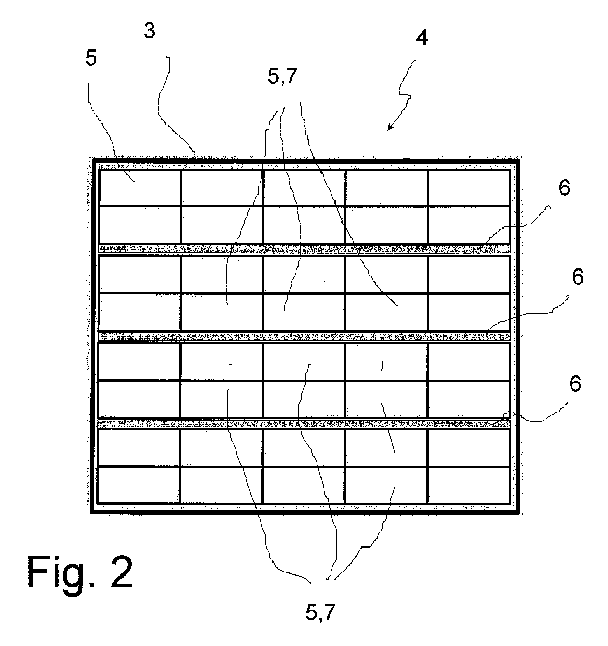

Die Fig. 2 zeigt schematisch in Aufsicht eine erfindungsgemäße Traktionsbatterie 4. In dem Batterietrog 3 sind hier verkürzte Zellen 5 eingesetzt, die in einer Längsrichtung, in der Darstellung hier senkrecht, gegenüber den Zellen 2 in der Fig. 1 eine geringere Längserstreckung aufweisen. Dadurch wird es möglich, in dem identischen Batterietrog 3 insgesamt drei Kühlkanäle 6 anzuordnen, durch die ein Luftstrom insbesondere in der Mitte angeordnete Zellen 7 kühlen kann. Durch hier nicht näher dargestellte Luftführungen und Lüfter kann der Luftstrom mit einem größeren Luftdurchsatz gestaltet werden und eine höhere Kühlleistung erbracht werden.

## Patentansprüche

1. Traktionsbatterie für ein Flurförderzeug mit einem Batterietrog (3) und einer Mehrzahl von Zellen (5,7),
**dadurch gekennzeichnet,**
**dass** zwischen den Zellen (7) mindestens ein Kühlkanal (6) in dem Batterietrog (3) angeordnet ist.

2. Traktionsbatterie nach Anspruch 1,
**dadurch gekennzeichnet,**
**dass** der Kühlkanal (6) von einer Wandseite des Batterietrogs (3) bis zur anderen Wandseite des Batterietrogs (3) durchläuft.

3. Traktionsbatterie nach Anspruch 1 oder 2,
**dadurch gekennzeichnet,**
**dass** der Kühlkanal (6) durch eine Mitte des Batterietrogs (3) läuft.

4. Traktionsbatterie nach einem der Ansprüche 1 bis 3,
**dadurch gekennzeichnet,**
**dass** eine Mehrzahl von Kühlkanälen (6) parallel angeordnet ist, bevorzugt durch einen mittleren Bereich des Batterietrogs (3) laufend.

5. Traktionsbatterie nach einem der Ansprüche 1 bis 4,
**dadurch gekennzeichnet,**
**dass** zur Bildung des Kühlkanals (6) Zellen (5,7) mit gegenüber den Maßen normierter Zellen (2) abweichenden Außenabmessungen eingesetzt sind.

6. Traktionsbatterie nach einem der Ansprüche 1 bis 5,
**dadurch gekennzeichnet,**
**dass** durch den Kühlkanal (6) ein Luftstrom geführt ist.

7. Traktionsbatterie nach Anspruch 6,
**dadurch gekennzeichnet,**
**dass** der Kühlkanal (6) Luftführungen aufweist, insbesondere an der Oberseite eine Einlassöffnung sowie eine Auslassöffnung.

8. Traktionsbatterie nach Anspruch 6 oder 7,
**dadurch gekennzeichnet,**
**dass** mindestens ein Lüfter zur Erzeugung des Luftstroms vorgesehen ist.

9. Traktionsbatterie nach Anspruch 8,
**dadurch gekennzeichnet,**
**dass** der Lüfter temperaturabhängig durch einen Temperatursensor gesteuert ist.

10. Traktionsbatterie nach Anspruch 8 oder 9,
**dadurch gekennzeichnet,**
**dass** der Lüfter über eine drahtlose oder kabelgebundene Signalverbindung von einem Ladegerät und/oder dem Flurförderzeug gesteuert werden kann.

11. Traktionsbatterie nach einem der Ansprüche 1 bis 10,
**dadurch gekennzeichnet,**
**dass** in den Kühlkanälen (6) Kühlvorrichtungen mit Wasser als Kühlmittel angeordnet sind.

12. Traktionsbatterie nach einem der Ansprüche 1 bis 11,
**dadurch gekennzeichnet,**
**dass** Zusatzgewichte, insbesondere in den Kühlkanälen (6), vorgesehen sind, so dass die Traktionsbatterie (4) das Gewicht einer Standardbatterie ohne Kühlkanäle (6) aufweist.
